# EUROPEAN PATENT SPECIFICATION

(11) **EP 1 342 884 B1**
(45) Date of publication and mention of the grant of the patent: **27.10.2004**
(21) Application number: 03000132.5
(22) Date of filing: 06.08.1998
(51) Int. Cl.: F01D 25/16, F01D 25/18, F02C 6/12, F04D 29/26, F04D 29/28

(54) **Turbocharger**
Turbolader
Turbocompresseur

(30) Priority: 06.08.1997 US 54908 P; 09.07.1998 US 112517
(43) Date of publication of application: 10.09.2003
(62) Divisional of application: 98939256.8
(73) Proprietor: Honeywell International Inc., Morristown, New Jersey 07962-2245 (US)
(72) Inventor: Aguilar, Scott Grover, La Crescenta, California 91214 (US); Elpern, David George, Los Angeles, CA 90005 (US); Hebben, Peter John, Torrance, CA 90505 (US); Jensen, Lloyd Bill, CA 92314-9180 (US); Coleman, Steven Walter, Cypress, CA 90630 (US); Sahay, Sunhil Nandan, Palos Verdes Estates, CA 90274 (US); Milliken, Douglas Alan, Thousand Oaks, CA 91362 (US); Lopez, Raymond Leo, Fountain Valley, CA 92708 (US); Wick, Werner, Torrance, CA 90505 (US)
(74) Representative: Freeman, Jacqueline Carol

(56) References cited:
- DE-U- 29 702 119

## Description

This application is a divisional application and is divided from application 98 939 256.8.

### BACKGROUND OF THE INVENTION

This invention relates generally to turbochargers. More particularly, the invention provides a compressor wheel for a turbocharger.

Exhaust gas driven turbochargers include a rotating shaft carrying turbine wheel and a compressor wheel, which is rotatably supported within a center housing by oil lubricated bearings. The turbine wheel is driven by the exhaust gas at high rotational speeds, often in excess of 100,000 RPM, to drive the compressor wheel to provide boosted charge air for use by an internal combustion engine. Axial motion of the shaft and wheels must be resisted by the bearing system and rotational dynamics of the rotor group accommodated and damped by journal actio of the bearing system.

Typically the compressor wheel is attached to the turbine wheel by a shaft, cf. prior art document DE-U-29702119.

According to the present invention there is provided a compressor wheel for a turbocharger comprising a wheel having a thrust surface and a hub and a seal ring groove for receiving a ring seal to resist lubrication oil leakage and sealingly engage the center housing.

The details and features of the present invention will be more clearly understood with respect to the detailed description and drawings in which:
FIG. 1a is a side section view of a turbocharger incorporating a compressor wheel according to one embodiment of the invention.
FIG.1b is a side section view of a turbocharger incorporating a compressor wheel according to a second embodiment of the invention.
FIG. 2 is a section view of a compressor wheel for a turbocharger showing details of the invention.
FIG. 3 is a close up view detail of the area labelled 7 in FIG. 2.

### DETAILED DESCRIPTION OF THE INVENTION

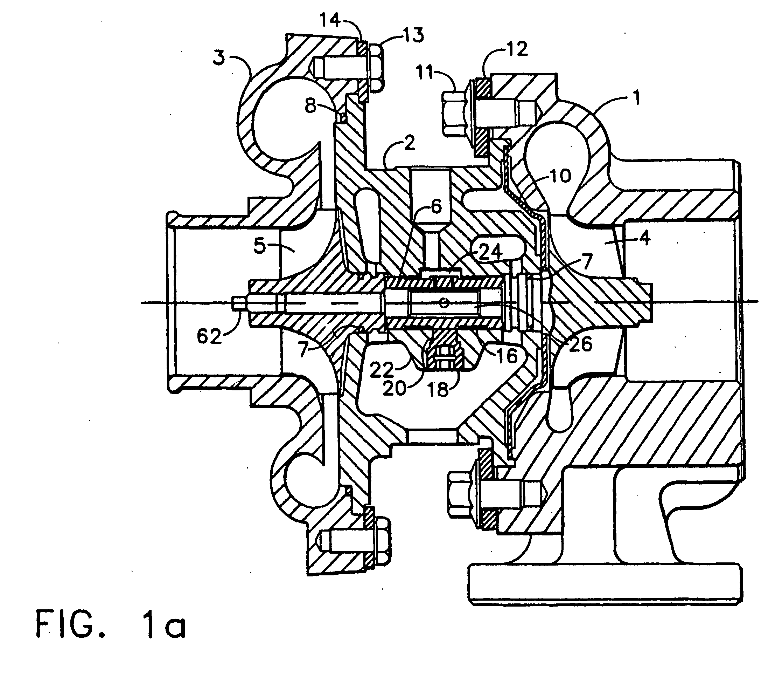

Referring to the drawings, a turbocharger is shown in FIG. 1a. A turbine housing 1, center housing 2 and compressor housing 3 form the case of the turbocharger. A turbine wheel and shaft assembly 4 are attached to a compressor wheel 5, with the shaft rotationally supported in a bearing 6 carried in the center housing. Piston ring seals 7 on the turbine wheel and compressor wheel hibs prevent lubrication oil leakage from the center housing into the turbine or compressor housings. A compression ring 8 enhances the sealing attachment of the compressor housing to the center housing. A shroud 10 is engaged between the turbine housing and center housing extending behind the turbine wheel as a thermal barrier. Bolts 11 extending through washer clamps 12 secure the turbine housing to the center housing while bolts 13 and washer clamps 14 secure the compressor housing to the center housing.

Bearing 6 is constrained from rotating in the bearing case bore 16 of the center housing by a pin 18 inserted through an aperture 20 in boss 22. The bearing is semi-floating with symmetrical freedom of movement from end to end due to the centrally located pin thereby optimizing the effectiveness of the oil-film damper in the clearance between the bearing outer diameter and case bore. Lubrication for the bearing is supplied through an inlet 24. The shaft extending though the bearing includes a relieved portion 26 promoting oil flow between the shaft and bearing.

One thrust surface of the bearing engages a thrust runner on the turbine wheel hub as shown in FIGs, 1a and b.

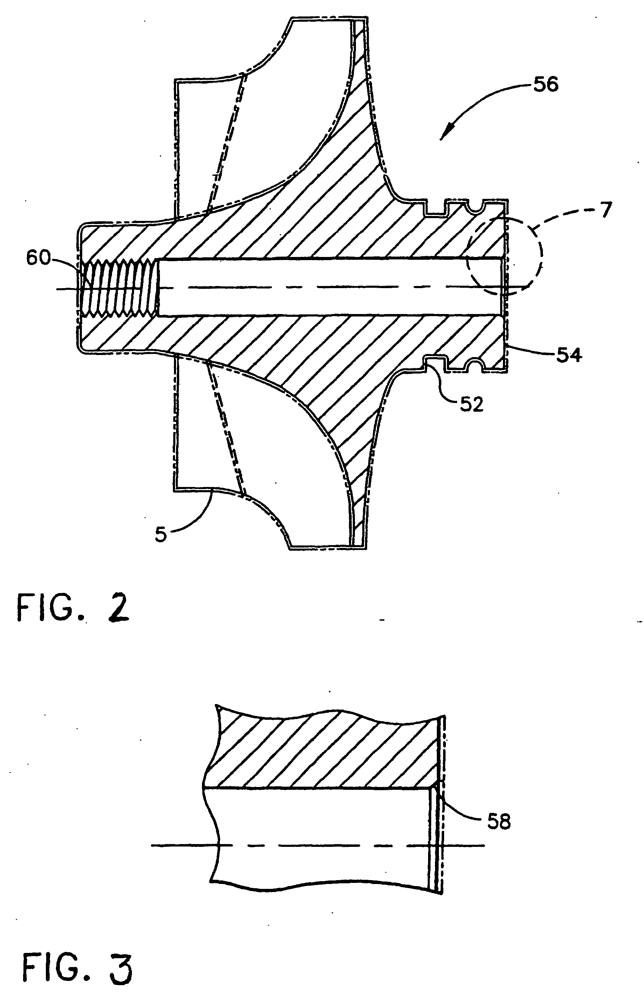

A compressor wheel is shown in detail in FIG.2. The wheel 5 includes a seal ring groove 52 and a thrust surface 54 integrated into the hub 56. Directly incorporating the thrust surface on the wheel hub reduces the number of mating surfaces improving normality and ease of balancing as well as improving heat transfer from the thrust surfaces. For the embodiment shown, a hard anodize on the compressor wheel is employed to improve thrust and seal ring wear on the hub. Nituff coating produced by Nimet Industries, Inc, 2424 N. Foundation Drive, South Blend, Indiana has been found to provide a suitable surface. For ease of processing the outer surfaces of the wheel are coated, however, the shaft bore is uncoated. As shown in FIG.3, a chamfer 58 on the bore exit to the thrust surface is employed for transition of the coating to avoid positive projection of coating build up on the thrust surface due to masking of the bore during processing.

The compressor wheel employed incorporated a threaded portion 60 at the nose of the bore for attachment to shaft 62 which minimizes overhung weight on the bearing. In addition, an overall reduction in overhang distance from the bearing journal to the center of mass of the wheel is provided by the design of the bearing system incorporating present invention. Reduced overhang reduces compressor-end deflection and improves the relative location of the bearing damper.

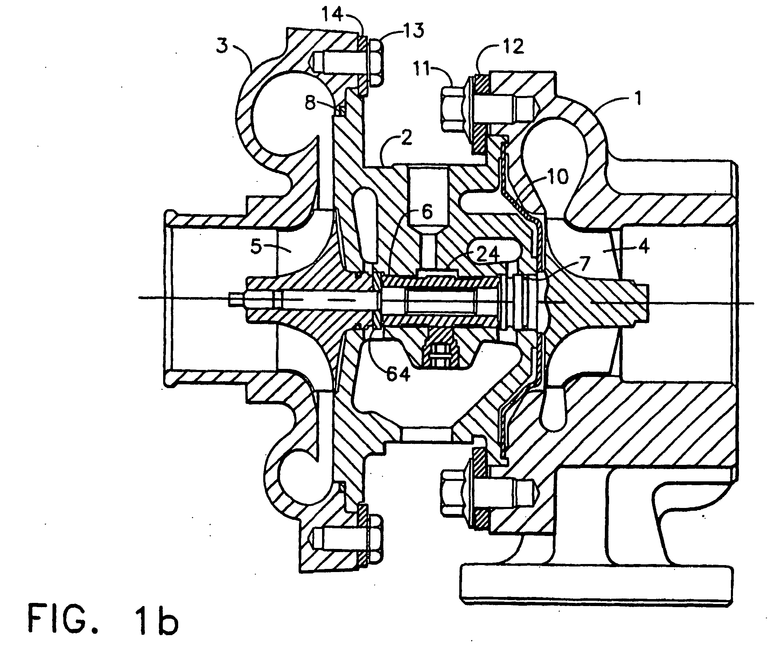

In FIG. 1b a thrust washer 64 is included between the bearing thrust surface and the compressor wheel hub. The washer accommodates thrust loads with higher wear tolerance. Use of a washer as opposed to a conventional thrust collar provides a simple fabrication geometry where required surface finish and parallelism are more easily maintained.

Having now described the invention in detail, those skilled in the art will recognize modifications and substitutions to the specific embodiments disclosed herein, the extent of protection being determined by the claims.

## Claims

1. A compressor wheel for a turbocharger comprising a wheel (5) having a hub (56) **characterized in that** the wheel (5) includes a thrust surface (54) and a seal ring groove (52) for receiving a ring seal (7) to resist lubrication oil leakage and sealingly engage the center housing.

2. A compressor according to claim 1 wherein the wheel (5) incorporates an integral hub (56) having an integral thrust surface (54).

3. A compressor according to claim 2 comprising an anodized coating on the hub thrust surface(54).

4. A compressor according to claim 3 wherein the anodized coating is Nituff.

5. A compressor according to claim 1 comprising a thrust washer on an end surface of the hub of the compressor wheel (5) engaging an adjacent thrust surface (28) of a bearing (6).

## Patentansprüche

1. Verdichterrad für einen Turbolader, das ein Rad (5) mit einer Nabe (56) umfaßt, **dadurch gekennzeichnet, daß** das Rad (5) eine Druckfläche (54) und eine Dichtringnut (52) zur Aufnahme einer Ringdichtung (7) beinhaltet, um einer Schmierölleckage entgegenzuwirken und in abdichtender Weise in das zentrale Gehäuse einzugreifen.

2. Verdichter nach Anspruch 1, bei dem das Rad (5) eine integrale Nabe (56) mit einer integralen Druckfläche (54) einschließt.

3. Verdichter nach Anspruch 2, der eine Eloxierbeschichtung auf der Nabendruckfläche (54) umfaßt.

4. Verdichter nach Anspruch 3, bei dem es sich bei der Eloxierbeschichtung um Nituff handelt.

5. Verdichter nach Anspruch 1, der eine Druckscheibe auf einer Endoberfläche der Nabe des Verdichterrads (5) umfaßt, die in eine angrenzende Druckfläche (28) eines Lagers (6) eingreift.

## Revendications

1. Roue de compresseur pour un turbocompresseur, comprenant une roue (5) avec un moyeu (56), **caractérisée en ce que** la roue (5) comprend une surface de butée (54) et une gorge de bague d'étanchéité (52) destinée à recevoir une bague d'étanchéité (7) pour résister aux fuites d'huile de lubrification et avoir un engagement étanche avec le carter central.

2. Compresseur selon la revendication 1, dans lequel la roue (5) comprend un moyeu intégré (56) ayant une surface de butée intégrée (54).

3. Compresseur selon la revendication 2, comprenant un revêtement anodisé sur la surface de butée du moyeu (54).

4. Compresseur selon la revendication 3, dans lequel le revêtement anodisé est en Nituff.

5. Compresseur selon la revendication 1, comprenant une rondelle de butée sur une surface d'extrémité du moyeu de la roue de compresseur (5) en engagement avec une surface de butée adjacente (28) d'un palier (6).
